# EUROPÄISCHE PATENTANMELDUNG

(11) **EP 0 556 464 A1**
(43) Veröffentlichungstag der Anmeldung: **25.08.1993**
(21) Anmeldenummer: 92120625.6
(22) Anmeldetag: 03.12.1992
(51) Int. Cl.: B60G 3/26

(54) **Einzelradaufhängung für Hinterräder eines Kraftfahrzeugs**

(30) Priorität: 15.02.1992 DE 4204593
(71) Anmelder: Volkswagen Aktiengesellschaft, D-38436 Wolfsburg (DE)
(72) Erfinder: Winter, Ingo, Dipl.-Ing., W-3172 Isenbüttel (DE)

(57) **Zusammenfassung**

Die Erfindung betrifft eine Einzelradaufhängung für vorzugsweise angetriebene Hinterräder eines Kraftfahrzeugs, bei der vier je einerseits am das Rad (1) lagernden Radträger (2) und andererseits direkt oder indirekt am Fahrzeugaufbau angelenkte Einzellenker vorgesehen sind, nämlich ein oberer und ein unterer Querlenker (3, 4), ein im wesentlichen in Fahrzeuglängsrichtung nach vorn gerichteter und aufbauseitig längsweich gelagerter Längslenker (5) sowie eine im Abstand vor der Radachse (9) am Radträger (2) angreifende Spurstange (6), wobei der Längslenker (5) unmittelbar am Radträger (2) in zwei voneinander beabstandeten Lagerstellen (7, 8) seitenweich befestigt ist. Um bei hoher Vorspursteifigkeit und bei hoher Sturzsteifigkeit, das heißt bei jeweils in Fahrzeugquerrichtung vergleichsweise hart bemessenen Querlenker- und Spurstangenlagerstellen unter Seitenkrafteinfluß F_{S} eine definierte positive Vorspuränderung gewünschter Größe zu erzielen, ist der untere Querlenker (4) am Radträger (2) im Abstand hinter der Radachse (9) angelenkt und die durch die radseitigen Anlenkpunkte (10, 11) des oberen und des unteren Querlenkers (3, 4) verlaufende Lenkachse 12 derart schräg gestellt, daß sie die Fahrbahn in einem spürbaren Abstand hinter dem Radaufstandspunkt (13) durchstößt, und zwar in einer Entfernung, die vorzugsweise dem halben statischen Radradius (R) entspricht, wobei darüber hinaus durch entsprechende Anordnung und Ausrichtung der radseitigen Anlenkstellen der Querlenker und der Spurstange das Hebelverhältnis des wirksamen Spurhebels (h_{SP}) zum wirksamen Nachlaufhebel (h_{NL}) so bemessen ist, daß es etwa in der Größenordnung zwischen 0,7 bis 1,3 liegt.

## Beschreibung

Die Erfindung betrifft eine Einzelradaufhängung für Hinterräder eines Kraftfahrzeugs der im Oberbegriff des Patentanspruchs genannten Art, wie sie beispielsweise aus der DE-OS 37 40 395 bekannt ist.

Im Laufe ihrer Entwicklung sind Personen-Kraftfahrzeuge ständig leistungsfähiger und sicherer geworden. Gleichzeitig stiegen die an sie gerichteten Anforderungen bezüglich Fahreigenschaften und Fahrkomfort, was u. a. auch zur Entwicklung von Hinterrad-Einzelradaufhängungen mit mehreren Einzellenkern führte.

Die Verwendung mehrerer Einzellenker verbessert spürbar die konstruktiven Möglichkeiten, auf die Kinematik der Einzelradaufhängung Einfluß nehmen zu können. Sie erhöht aber auch den fertigungstechnischen Aufwand und macht die Einzelradaufhängung als solche komplizierter.

Es ist daher grundsätzlich erstrebenswert, gute und sichere Fahreigenschaften sowie hohen Komfort mit möglichst wenigen Einzellenkern zu erzielen.

Aus der DE-OS 37 40 395 ist beispielsweise eine Einzelradaufhängung für Hinterräder eines Kraftfahrzeugs bekannt, bei der zur Radführung vier je einerseits am das Rad lagernden Radträger und andererseits am Fahrzeugaufbau angelenkte voneinander unabhängige Einzellenker vorgesehen sind, nämlich ein oberer und ein unterer Querlenker, ein im wesentlichen in Fahrzeuglängsrichtung nach vorn gerichteter und aufbauseitig längsweich gelagerter Längslenker sowie eine im Abstand hinter der Radachse am Radträger angreifende Spurstange, wobei der Längslenker unmittelbar am Radträger in zwei voneinander beabstandeten, etwa horizontal übereinander angeordneten Lagerstellen seitenweich befestigt ist.

Die Anlenkung der verschiedenen Einzellenker erfolgt bei Personenkraftwagen im allgemeinen mit Hilfe gummielastischer Lagerelemente, durch deren Bemessung das Änderungsverhalten der verschiedenen das Eigenlenkverhalten des Kraftfahrzeugs beeinflussenden Parameter, wie z. B. Vorspur und Sturz konstruktiv festgelegt werden kann.

Für das Eigenlenkverhalten eines Personenkraftwagens wird es im allgemeinen als vorteilhaft angesehen, wenn unter Seitenkrafteinfluß, wie z. B. beim Durchfahren von Kurven, an der Hinterachse des Fahrzeugs eine definierte positive Vorspuränderung auftritt. Gleichzeitig ist es für das Fahrverhalten und im Geradeauslauf des Fahrzeugs aber wichtig, daß die Räder generell eine hohe Sturzsteifigkeit sowie eine hohe Vorspursteifigkeit besitzen, das heißt am Rad angreifende Störmomente möglichst keine oder aber nur vernachlässigbar kleine Vorspuränderungen bewirken können.

Vor diesem Hintergrund liegt der Erfindung die Aufgabe zugrunde, eine Einzelradaufhängung der im Oberbegriff des Patentanspruchs 1 genannten Art derart zu verbessern, daß es möglich ist, bei generell hoher Sturzsteifigkeit und Vorspursteifigkeit unter Seitenkrafteinfluß eine gewünschte definierte positive Vorspuränderung einzustellen.

Diese Aufgabe wird erfindungsgemäß durch die Merkmale des Patentanspruchs 1 gelöst.

Erfindungsgemäß ist also der untere Querlenker am Radträger im Abstand hinter der Radachse angelenkt und die durch die radseitigen Anlenkpunkte des oberen und des unteren Querlenkers verlaufende fiktive Lenkachse derart schräg gestellt, daß sie die Fahrbahn etwa in einer Entfernung, die mindestens einem viertel des statischen Radradius', vorzugsweise aber dem halben statischen Radradius entspricht, hinter dem Radaufstandspunkt durchstößt; gleichzeitig greift die Spurstange im Abstand vor der Radachse am Radträger an, wobei das Hebelverhältnis des wirksamen Spurhebels zum wirksamen Nachlaufhebel etwa im Bereich zwischen 0,7 bis 1,3 liegt.

Durch diese Konzeption ist es möglich, einerseits eine hohe Vorspursteifigkeit und eine hohe Sturzsteifigkeit vorzusehen und andererseits eine gewünschte definierte positive Vorspuränderung unter Seitenkrafteinfluß einzustellen. Durch die gewählte Konzeption ist es nämlich möglich, sowohl die Spurstange als auch die beiden Querlenker jeweils vergleichsweise seitenhart anzubinden und trotzdem unter Seitenkrafteinfluß eine Vorspuränderung gewünschter Größe zu erzielen.

Bei der vorbekannten Einzelradaufhängung mit vier Einzellenkern gelingt dagegen jeweils nur das eine oder das andere. Wenn die Querlenker vergleichsweise seitenhart angelenkt werden, kann zwar durch eine entsprechend weich bemessene Spurstangenanlenkung die gewünschte Vorspuränderung bei Seitenkrafteinfluß erzielt werden, aber nur unter Inkaufnahme einer geringen Vorspursteifigkeit, was bedeutet, daß die Räder z. B. unter der Wirkung von an ihnen angreifenden fahrbahnbedingten (z. B. Überfahren von Schlaglöchern oder Spurrillen) Störmomenten größere Vorspuränderungen erfahren, was für den Geradeauslauf und den Fahrkomfort von Nachteil ist.

Wenn dagegen bei der vorbekannten Einzelradaufhängung zwecks Erhöhung der Vorspursteifigkeit die Spurstange seitenhärter angelenkt werden würde, müßte zwecks Erzielung einer gewünschten definierten positiven Vorspuränderung unter Seitenkrafteinfluß die Querlenker entsprechend seitenweicher angelenkt werden; eine seitenweichere Anlenkung der Querlenker wäre aber mit einer entsprechend geringeren Sturzsteifigkeit verbunden, was wiederum einen Seitenkraftverlust am Reifen zur Folge hätte.

Die Spurstange im Abstand vor der Radachse und den unteren Querlenker im Abstand hinter der Radachse am Radträger anzulenken sowie die durch die Ausrichtung der oberen und unteren Einzellenker bestimmte fiktive Lenk- oder Schwenkachse derart schräg auszurichten, daß sie die Fahrbahn hinter dem Radaufstandspunkt durchstößt, ist aus der DE-PS 30 48 794, die eine Einzelradaufhängung mit insgesamt fünf Einzellenkern offenbart, für sich bereits bekannt, doch durchstößt die Lenk- bzw. Schwenkachse bei dieser vorbekannten Einzelradaufhängung die Fahrbahn relativ nahe hinter dem Radaufstandspunkt und es liegen auch völlig andere Hebelverhältnisse zwischen dem wirksamen Spurhebel und dem wirksamen Nachlaufhebel vor.

An Hand eines in der Zeichnung dargestellten Ausführungsbeispiels wird die Erfindung nachstehend näher erläutert.

In der Zeichnung zeigen
- Figuren 1 bis 3: eine Einzelradaufhängung mit vier Einzellenkern gemäß der Erfindung in einer Seitenansicht, einer Draufsicht, sowie in Fahrzeuglängsrichtung gesehen,
- Figur 4: eine prinzipienhafte Seitenansicht einer solchen Einzelradaufhängung mit eingezeichneter Lenkachse und
- Figur 5: eine prinzipionhafte Draufsicht dieser Einzelradaufhängung in Richtung der Lenkachse gesehen.

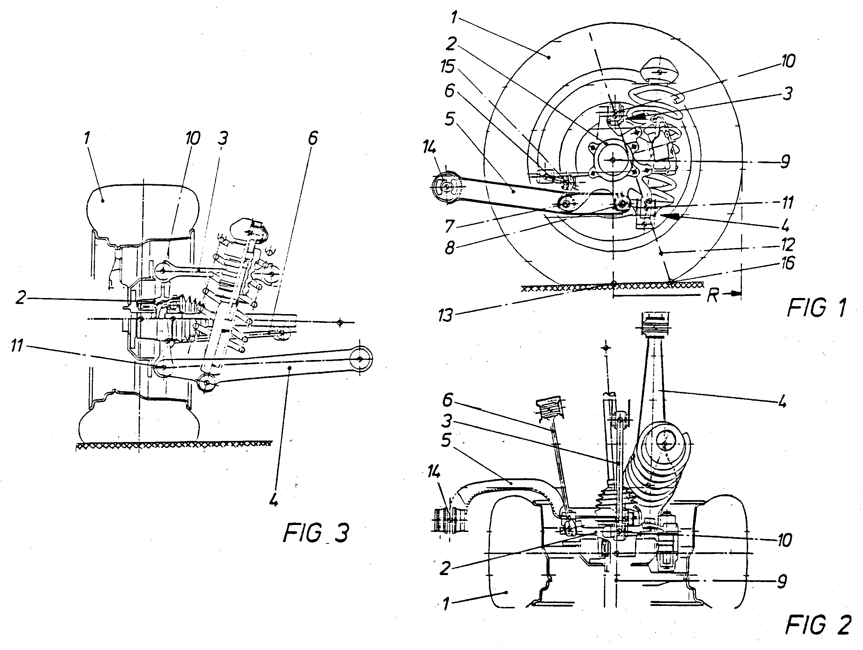

Die in den Figuren 1 bis 3 als Ausführungsbeispiel dargestellte Einzelradaufhängung für die angetriebenen Hinterräder 1 eines Personenkraftwagens enthält als Radführungsglieder für jedes Hinterrad 1 vier Einzellenker, die jeweils einerseits an dem das Rad 1 lagernden Radträger 2 und andererseits an dem nicht weiter dargestellten Fahrzeugaufbau angelenkt sind, wobei zumindest ein Teil dieser Radführungsglieder in bekannter Weise auch an einem selbst mittels gummielastischer Elemente am Fahrzeugaufbau befestigten Hilfsrahmen o. ä. angelenkt sein können.

Als Einzellenker sind zum einen ein im wesentlichen in Fahrzeuglängsrichtung nach vorn gerichteter Längslenker 5 und zum anderen ein oberer und ein unterer Querlenker 3 bzw. 4 sowie eine im Abstand vor der Radachse 9 am Radträger 2 angreifende Spurstange 6 vorgesehen.

Der aufbauseitig über ein entsprechend bemessenes gummielastisches Lagerelement 14 längsweich gelagerte Längslenker 5 ist mit seinem radseitigem Ende unmittelbar am Radträger 2 in zwei voneinander beabstandeten Lagerstellen 7, 8 seitenweich, d. h. weich in Fahrzeugquerrichtung befestigt.

Durch die längsweiche aufbauseitige Anlenkung des Längslenkers 5 wird in bekannter Weise ein Längsfedereffekt erzielt, der dem Fahrkomfort zugute kommt. Durch die seitenweiche bzw. querweiche radseitige Anbindung des Längslenkers werden dagegen seitliche Relativbewegungen zwischen Radträger 2 einerseits und Längslenker 5 andererseits zugelassen.

Der untere Querlenker 4 ist am Radträger 2 - in der Fahrzeugseiten- und/oder -draufsicht gesehen - im Abstand hinter der Radachse 9 angelenkt. Der obere Querlenker 3 ist seinerseits derart am Radträger 2 angelenkt, daß eine durch die radseitigen Anlenkpunkte 10 und 11 des oberen und des unteren Querlenkers 3 bzw. 4 verlaufende Lenkachse 12 die Fahrbahn - in der Fahrzeugseitenansicht gesehen - in einem spürbaren Abstand hinter dem mit 13 bezifferten Radaufstandspunkt durchstößt, und zwar in einer Entfernung, die im dargestellten Ausführungsbeispiel dem halben statischen Radradius R entspricht, zumindest aber einem viertel des statischen Radradius' entsprechen sollte.

Des weiteren sind die radträgerseitigen Anlenkpunkte 10 und 11 der beiden Querlenker 3 und 4 sowie 15 der Spurstange 6 räumlich derart zueinander ausgerichtet, daß das Hebelverhältnis des sich ergebenden wirksamen Spurhebels h_{SP} zum wirksamen Nachlaufhebel h_{NL} etwa in der Größenordnung zwischen 0,7 bis 1,3 liegt.

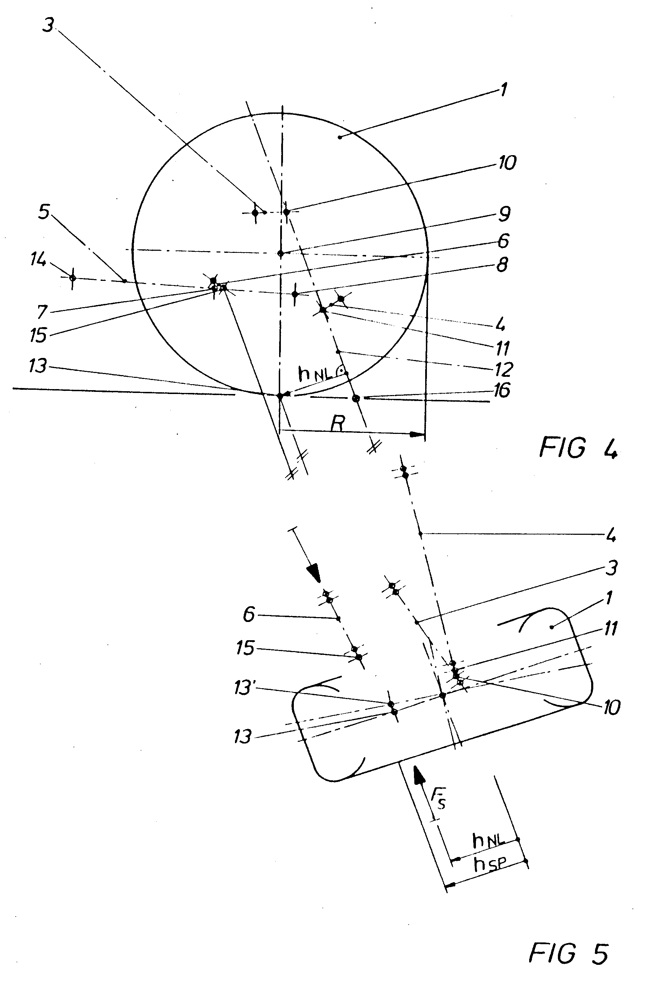

Diese Konstellation ist in den Schemazeichnungen der Figuren 4 und 5 dargestellt, wobei in diesem Ausführungsbeispiel der obere sowie der untere Querlenker 3 bzw. 4 jeweils leicht zur Fahrzeugquerrichtung schräg verlaufen, während sie im Ausführungsbeispiel der Figuren 1 bis 3 in etwa genau in Fahrzeugquerrichtung ausgerichtet sind. Die Bezifferung dieses Ausführungsbeispiels stimmt mit der des Ausführungsbeispiels der Figuren 1 bis 3 überein.

Da der Abstand zwischen dem Radaufstandspunkt 13 und dem Durchtrittspunkt 16 der Lenkachse 12 durch die Fahrbahn mit 0,25 bis 0,5 R vergleichsweise groß ist, ist für die im Radaufstandspunkt 13 am Rad 1 angreifenden Seitenkräfte F_{S} ein vergleichsweise großer Hebelarm der "Nachlaufhebel" h_{NL}, wirksam, so daß auf das Rad ein entsprechend großes in Richtung Vorspur drehendes Moment angreift, was von der Spurstange 6 abgestützt werden muß, und zwar derart, daß das Rad 1 unter diesem Seitenkrafteinfluß gerade um ein gewünschtes definiertes Maß in Richtung Vorspur verschwenkt wird, wie dies in Figur 5 - übertrieben - strichliert angedeutet ist, wobei der entsprechend nach innen verlagerte Radaufstandspunkt mit 13' beziffert ist.

Da der in Figur 5 eingezeichnete wirksame Spurhebel h_{SP} (das von der Lenkachse 12 auf den radseitigen Anlenkpunkt 15 der Spurstange 6 gefällte Lot) mit 0,7 bis 1,3 h_{NL} vergleichsweise groß gewählt ist, kann die Spurstange 6 aufbau- und radseitig vergleichsweise hart angebunden werden, das heißt die gummielastischen Lagerelemente der Spurstange können in Fahrzeugquerrichtung vergleichsweise hart ausgebildet sein, und trotzdem kann unter Seitenkrafteinfluß F_{S} eine Vorspuränderung gewünschter Größe erzielt werden.

Eine in Fahrzeugquerrichtung harte Ausbildung der Spurstangenlager ist von Vorteil, da sie zum einen einen hohen Wirkungsgrad der Spurstange bedeutet, und zum anderen eine hohe Vorspursteifigkeit der Einzelradaufhängung bewirkt. Eine hohe Vorspursteifigkeit ist aber für den Fahrkomfort und das Eigenlenkverhalten des Fahrzeugs bedeutsam, weil dann durch Durchfahren von Schlaglöchern oder Überfahren von Spurrillen o. ä. ausgelöste Störmomente das Rad nicht oder allenfalls nur geringfügig um die Radhochachse auslenken können.

Da bei der vorgeschlagenen Anordnung und Ausrichtung der Einzellenker auch bei Verwendung vergleichsweise harter Spurstangenlager unter Seitenkrafteinfluß F_{S} eine definierte positive Vorspuranderung gewünschter Größe erzielt werden kann, können auch die Lagerstellen der beiden Querlenker 3 und 4 in Fahrzeugquerrichtung vergleichsweise hart ausgebildet werden, was in vorteilhafter Weise eine vergleichsweise große Sturzsteifigkeit der Einzelradaufhängung bewirkt.

Durch die vorgeschlagene Ausbildung der Einzelradaufhängung kann durch entsprechende Bemessung der jeweiligen Lagerelastizität in einfacher Weise eine den jeweiligen Gegebenheiten angepaßte optimale Achskennung erzielen.

Im in den Figuren 1 bis 3 dargestellten Ausführungsbeispiel erfolgt die seitenweiche radträgerseitige Anlenkung des Längslenkers 5 in vorteilhafter Weise mit Hilfe zweier im horizontalen Abstand zueinander angeordneter Lagerstellen 7, 8 mit in Fahrzeugquerrichtung parallel zueinander verlaufenden Lagerachse. Diese Ausrichtung der Lagerstellen ist u. a. fertigungstechnisch von Vorteil, weil erforderliche Bohrungen zur Radachse 9 etc. gleichgerichtet sind.

## Patentansprüche

1. Einzelradaufhängung für Hinterräder eines Kraftfahrzeuges, vorzugsweise für angetriebene Hinterräder, mit vier je einerseits am das Rad (1) lagernden Radträger (2) und andererseits direkt oder indirekt am Fahrzeugaufbau angelenkten Einzellenkern, nämlich einem oberen und einem unteren Querlenker (3, 4), einem im wesentlichen in Fahrzeuglängsrichtung nach vorn gerichteten und aufbauseitig längsweich gelagerten Längslenker (5) sowie einer Spurstange (6), wobei der Längslenker (5) unmittelbar am Radträger (2) in zwei voneinander beabstandeten Lagerstellen (7,8) seitenweich befestigt ist, dadurch gekennzeichnet,
daß der untere Querlenker (4) - in der Fahrzeugseiten- und/oder -draufsicht gesehen - am Radträger (2) im Abstand hinter der Radachse (9) angelenkt ist,
daß die durch die radseitigen Anlenkpunkte (10, 11) des oberen und des unteren Querlenkers (3 bzw. 4) verlaufende Lenkachse (12) die Fahrbahn - in der Fahrzeugseitenansicht gesehen - im Abstand hinter dem Radaufstandspunkt (13) durchstößt, und zwar in einer Entfernung,die mindestens einem viertel des statischen Radradius' (R), vorzugsweise dem halben statischen Radradius (R) entspricht,
daß die Spurstange (6) im Abstand vor der Radachse (9) am Radträger (2) angreift,
und daß das Hebelverhältnis des wirksamen Spurhebels (h_{SP}) zum wirksamen Nachlaufhebel (h_{NL}) etwa im Bereich zwischen 0,7 bis 1,3 liegt.

2. Einzelradaufhängung nach Anspruch 1,
dadurch gekennzeichnet,
daß die radseitigen Lagerstellen (7, 8) des Längslenkers (5) durch zwei im horizontalen Abstand zueinander angeordnete gummielastische Lagerstellen gebildet sind, die etwa in Fahrzeugquerrichtung und parallel zueinander verlaufende Lagerachsen aufweisen und in Fahrzeugquerrichtung vergleichsweise weich, zumindest in der Hochrichtung dagegen vergleichsweise hart bemessen sind.
